# EUROPEAN PATENT APPLICATION

(11) **EP 2 541 045 A1**
(43) Date of publication of application: **02.01.2013**
(21) Application number: 11746887.6
(22) Date of filing: 13.01.2011
(51) Int. Cl.: F03B 17/02, F03B 17/04

(54) **HYDRAULIC GENERATOR**

(30) Priority: 23.02.2010 ES 201000036
(71) Applicant: Campos Alvarez, Sergio, 32004 Orense (ES)
(72) Inventor: Campos Alvarez, Sergio, 32004 Orense (ES)
(74) Representative: Garcia-Cabrerizo y del Santo, Pedro Maria
(86) International application number: PCT/ES2011/000004
(87) International publication number: WO 2011/104394

(57) **Abstract**

The invention relates to a hydraulic generator formed by a set of different specific chains which are coordinated and complement one another such as to allow floats to enter a tank and to force said floats along a predetermined path, in order to make maximum use of the upward force thereof. A first chain neutralizes the internal hydraulic pressure on the front of the floats, allowing the floats to be introduced at the bottom of the tank. Once a float has entered the tank, the first chain transfers the float to the second chain which uses the upward force of the floats and converts said force into mechanical work, in accordance with Archimedes' principle. The second chain drives the entire system. A third chain removes each float that reaches the surface from the tank and introduces said float into an external channel that returns the float to the entrance, assisted by a fourth chain and a moderate-pressure system that forces the float back in. The operation is repeated automatically and indefinitely. The shaft of the second chain extends through the wall of the tank either directly or indirectly, thereby transmitting the vast majority of the work obtained (since part is consumed in driving the system) in order for the same to be converted externally.

## Description

It relates to a Sercam-type Hydraulic Generator, formed by a system of different chains, but complementary and synchronized, the purpose of which is to insert and remove floats from a tank.

### BACKGROUND

I know some projects of this type, and I know countless pursued this same purpose, but I am not aware of any that has been made or that is feasible. The fact that it has still not been possible to overcome the Principle of Equivalence, nor the remaining related to the conservation of energy (at least there is no record), make me feel sure that, both the generator I plan and the procedure that I am presenting to achieve it, are absolutely new. Its feasibility is supported on my own opinion that the fluids do not press where they do not touch.

This generator is formed by a series of components listed below and their numbering allows locating them in the corresponding accompanying layout, seen in vertical section, for a better understanding.
1.-Tank.
2.- Tank walls.
   A.- First chain.
   B.- Second chain.
   C- Third chain.
   D.- Fourth chain.
   E.- Bearings (rollers) of 4th chain.
   F.- External floats channel.
3.- Access gate to the tank.
4.- Drain pipe of the tank.
5.- Filling pipe
6.- Returning floats.
   6-A.- Tabs that slow down the drop of the floats.
7.- Deck Terrace.
8.- Booster container of the tank.
9.- Filtering entrance of rainwater to the tank.
10.- Booster drain.
11.- Practicable or sliding roof.
12.- Stagnant fluid level.
13.- Ascending floats.
14.- Chain of transmission between shafts of the 1st chain.
   14.A.- Gears of change of direction of rotation of the 1st chain.
15.- Links as such.
   15-A.- Protrusions of the links of the first chain.
16a and b- Floats passing from the 1st to the 2nd chain.
17.- Float that ended the entrance to the tank.
   17-A.- Float that starts the entrance.
   17-B.- Safety valve, in case of failure of incoming floats.
18.- Drum pressure gears 18-A.
   18-A.- Drum that presses the floats that are accessing the tank.
   18-B.- Link in position for starting the drag of the float 17 and entrance of the 17-A.
19.- Pressure engine that moves the drum 18-A.
20.- Engine of the fourth chain, forcing the floats to reach the entrance.
21.- Tank that collects the drained from the descending floats.
22.- Transmission chain or pulley from the 1st to the 2nd chain.
23.- Lower shaft of the second chain.
24.- Anchors of the channel of returning floats.
25.- Partial adaptation of the wall of the tank.
26.- Anchor reinforcement strap of the 2nd chain.
27.- Inclined plates that facilitate the penetration and mobility of the float.
28.- Counterweight that reverses the position of the plate - 27 - in the descent.
29.- Sheet -27- in vertical position.

There is, first of all, the tank - 1 - limited by the walls - 2 + 2 - with an access gate to the inside - 3-, and the corresponding drain - 4 - and filling -5- pipes.

It is equipped with 4 or 5 chains, or equivalent parts, marked with the letters A, B, C and D and with an unknown number of floats -6-.

The first chain -A-, key part of the system, is made up of big links, one or several parts (2 in this case), having large protrusions of triangular or trapezoidal section attached, by way of giant ladder rungs.

The main functions of this 1st chain are: A) supporting the pressure of the fluid stalled in the front, annulling the one that corresponds to the front plane of each accessing float, which makes possible its entrance (position of the floats -7-; and -7.B-. and B) Move them to the 2nd chain, once they have entered: positions -6.a- and -6.b-.

The floats enter pushed by any means of pressure. In this case forced by the engine - 19 - which, through the gear - 18 -, moves the drum -18.A- or 5th chain, the protrusions of which fit into the slots of the floats and force them to adhere again to each other (17th and 18) and to the links of this first chain.

Since there is no front pressure on the floats that enter and the sides are compensated, it can be assumed that the pressure required to introduce the float and overcome the friction, is very moderate.

The transfer of floats to the second chain is carried out by the normal rotation of this first one, re-adhered to the protrusion of each link by the external pressure, until exceeding the line of entrance, and then by the push of the fluid itself they have below, until the end of the horizontal path, in which moment it is coupled to the anchors of the 2nd chain.

There is significant friction between the incoming float - 17.A - and the preceding one - 17-, when moving over it and over the following link, but this friction is considerably reduced by the humidity of the friction surfaces, in addition to by the possible or rather for certain lubrication that the float acquires when going through the fat layer that is expected to cover the liquid mass of the tank, to minimize the evaporation.

The base of the links - 15-, i.e. the chain as such, extends beyond the width of its protrusions (rungs), on both sides of the same, with bearings at its ends, rolling fastened to a fixed element as it may be within an channel or embracing a rail attached, directly or indirectly, to the walls of the tank.

These extensions, that only need to be put on track in the front of the chain, have the mission of solidly fixing the position of its straight path against the entrance of the floats and must have the necessary strength to withstand the pressure of the column of liquid they have on top, and the thrust of the incoming floats, when being pressed against the links to which they must re-adhere as much as necessary to prevent the interposition of the fluid between float and link. These links are the ones that, as mentioned earlier, support and cancel the pressure of the stagnant fluid on the front of the incoming floats.

The second chain - B- collects in its anchorages, the floats that arrive from the first chain and this is the one that transforms the upward force thereof into mechanical work, by the Archimedes' principle. Its shafts are connected, by any system of transmission to the shafts of the first and third chains changing their direction of rotation, by the corresponding gears, chains or pulleys, and gives them propulsion. This 2nd chain is the one that moves all the system: The 1st and the 3rd directly and the fourth and fifth, if any, transmitting the excess of the obtained work to the outside of the tank.

The shafts of the inner chains can exit or not the tank, except for the ones of the second chain that must exit, at least one, for transferring outside the excess work, in order to be able to transform it, use it, even establish improvements, such as a braking system, etc.

The 3rd chain - C - is the one that collects the floats that arrive to the surface of the tank and transfers them to the external channel - F - that returns them to the entrance.

The 4th chain -D- is one of the various means that can be used to facilitate, even force the returning floats, to make the direction rotation and to ensure their timely arrival at the entrance of the tank.

It is not excluded any float shape, but it is expected to be hexahedron. The ones of the project are one m. side cubes and, in any case, they shall be of solid material, lightweight, hollow, although filled with another very light material such as foam, which ensures the seal; coated with friction-resistant, sliding material and somewhat soft to fit better to the walls of the entrance and, in the front plane, to the one preceding it and the links of the chain, which will also be covered with the same or similar material, with the purpose of facilitating the coupling and minimizing the friction.

A slight, very narrow protrusion, or a limpet-type edge, in the edges of the front plane of the floats, will allow a more perfect fit, and a drastic reduction of the pressure surface to prevent more easily the interposition of the fluid between the link and the float. It is less expensive to press on the 400 cm2. of the edges, than on the 10,000 cm2. of the front plane of the floats.

Floats entrance: The first float - 17 - ended its entrance front path: it is already inside the tank, without having frontally touched the interior fluid and it has already shifted the liquid mass corresponding to its volume. The next step will be its shift towards the 2nd chain, pushed by the normal rotation of the 1st chain, successively reaching the positions - 16.a - and - 16.b-, and the intermediate, until reaching and being coupled to the anchorages of the 2nd chain.

While the float - 17 - starts that horizontal displacement, it frontally protects the float - 17.A- from front contact with the fluid until it is completely coupled to the following link. All this is done by the simple advance of the chain and the pressure of the engine -19-.

The float - 17.A- (like all, when entering) which is in position to start its access will move only frontally: when the chain moves forward, it will continue to re-adhere to the float - 17 - that already arrived, as shown in the layout, until coupling to the link - 18.B - on which it will slide and it will be entering as the decrease of the volume of it allows it and makes space for it. When that link reaches the end, it will have reached the position that the float - 17- now has. The operation will continue repeating indefinitely.

The start-up of the generator requires an initial contribution of energy to start the engine - 19- (from the network or from an electrical generator), until it can be moved by the anergy created by the generator of the project. It is also needed to fill with floats the external channel thereof - F - and to locate the interior ones in the respective anchors of the second chain, as the filling is being carried out. All this with the second chain completely braked. Once the filling has been finished, the brake is released and the passage of the temporary power supply of the engine, to the final power supply is synchronized.

The valve - 17.B - has the mission of closing the exit of the stagnant fluid, if by any failure, the floats that close the entrance are missing. In such a case the emptying of the tank would be automatically lowered and blocked.

The tabs - 16 - gently press the floats that come out of the tank, to soften their fall on the preceding float.

The convenience of a clutch at the output of the pressure engine is not discarded.

The tank is supposed to be closed. However, it is expected that it can have a layer of light, oily fluid, annulling or minimizing the evaporation and, at the same time, lubricating the floats, reducing their friction and facilitating their displacement.

Presumably these returning floats generate a slight drain that would be deposited into the small tank -21 - and an engine will take care of automatically return it, to the tank or to the booster - 8 - every time it is filled.

The cover of the tank is divided into two areas: One - 7 - would be terrace and another one - 11 - a practicable or sliding roof, to introduce or remove from the tank materials that it is not convenient or cannot be removed by the gate of the base. For this could, it could be placed a crane or materials on the terrace.

The tank - 8 - would be a booster allowing maintaining the level of the main tank automatically stable by the exit - 10-. The entrance - 9 - would serve to collect and filter rainwater from the terrace, if appropriate.

The anchor reinforcement strap -26 -, can be centred, be narrow and have, jointed on it, triangular sheets or panels on each side, so to completely cover the surface of the float, with the purpose of endowing it with a certain hydrodynamics that favours its penetration into the liquid mass and improves its rate of ascent.

These sheets would have a counterweight - 28 - at the bottom, in the wide part, so that when they descend, the position -29 - is inverted and descend vertically, entering edgewise into the fluid, without resistance.

The power of this system that is claimed, depends on the volume of its components and, mainly, on the height of the tank, which determines the number of ascending floats. Its performance can also be improved by increasing the density of the liquid of the tank, by adding any product suitable for this purpose.

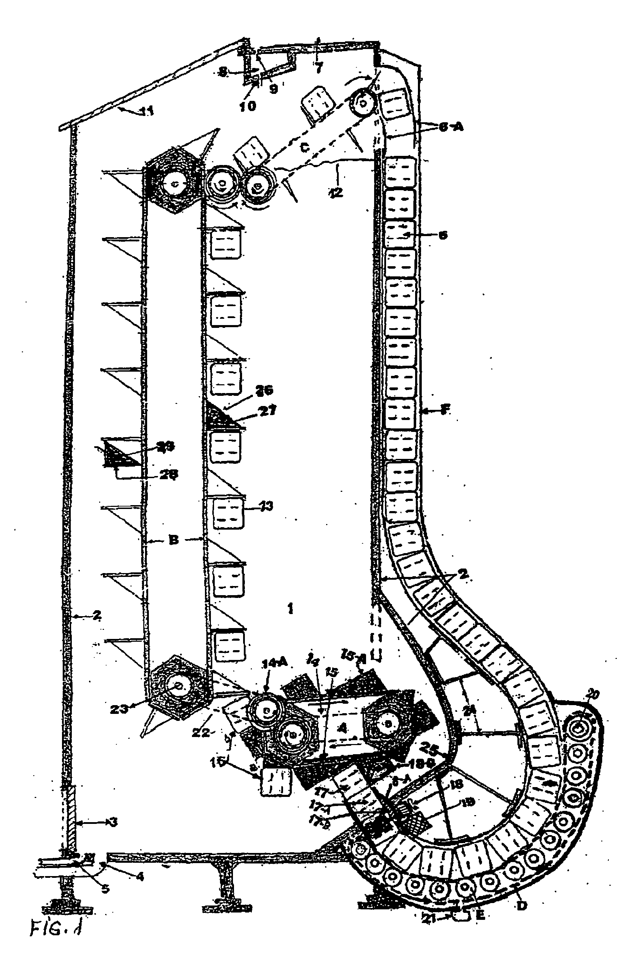

## Claims

1. Hydraulic generator **characterized by** a system of special, distinct but interdependent chains with components specific for their respective roles, with the common purpose of introducing and removing floats from a tank.

2. Hydraulic generator characterized, according to claim 1, by a first drag chain, **characterized by** the following singularities: A) Long links with large protrusions of triangular section attached to them, by way of large volume rungs, of one or several parts each. B) The bases of these links or links as such extend at both sides of the width of the chain (and of those protrusions), provided or not with bearings at their ends, on which are displaced in a straight line, at least on the front, supported on robust parts, directly or indirectly fastened to the walls of the tank, for example, inside a channel, embracing a rail or in any way that forces them to run along a predetermined fixed path. C) In that this first chain, performs the function of making it possible to introduce floats in the bottom of a tank, supporting and, therefore, cancelling the internal hydraulic pressure on the front plane of the incoming floats re-adhered thereto, under pressure from outside, to avoid its front contact with the fluid. D) In that, when the links move forward and their height is gradually reduced, they move away from the wall of the tank and make space for the incoming float, without the need to overcome any kind of hydraulic resistance to move the volume of liquid corresponding to its volume, since the lateral pressures are balanced and the front is fully supported by the link to which the float is re-adhered. And E) By its suitability for transporting every float that enters, to the second chain.

3. Hydraulic generator characterized, according to claims 1 and 2, by a specific 2nd chain, with anchors to which the floats received from the 1st chain are attached and which make it rotate to transform the upward force thereof into mechanical work, by the Archimedes' principle.

4. Hydraulic generator characterized, according to claims 1, 2 and 3, by a third chain, with anchors suitable to collect the floats when they reach the surface, remove them from the tank and move them to an external channel that makes the reach again, first by their own weight, vertical part, and, finally, by sliding means or by a 4th chain, or both, that take them again to the entrance of the tank, to repeat the same path indefinitely.

5. Hydraulic generator characterized, according to claims 1, 2, 3 and 4, in that the floats are introduced into the tank pushed by any means of pressure, to re-adhere them to each other and to the protrusions of the links of the 1 st chain, thus avoiding the contact of their front with the inner liquid mass, which together with the progressive descent of said protrusions that slide over the float, make possible their entrance in the tank.

6. Hydraulic generator characterized, according to claims 1, 2, 3, 4, and 5, by the following functions: A) In that the shafts of the 2nd chain are the ones that, through suitable connections, move the first and third chains, and reverse, with the corresponding gears or pulleys, its direction of rotation. And B) In that the shafts of all the chains from inside the tank, may cross or not the walls of the same, and be connected inside or outside to other mechanisms, with the exception of the shafts of the 2nd chain which necessarily must exit, directly or indirectly, at least one, by one or by the two ends to the outside of the tank, to transfer to other machines the excess work obtained by this second chain, in order to transform it outside, to install braking systems, or for any other function, use or improvement that it is deemed necessary.

7. Hydraulic generator characterized, according to claims 1, 2, 3, 4, 5, and 6, A) By being a suitable and effective procedure to introduce floats in a tank, releasing the incoming ones from the front hydraulic pressure, which is supported by another component, without altering the balance of the side pressures. And B) By its effectiveness to transform position energy into mechanical work, through a system of chains and floats.
